(19) **Europäisches Patentamt**

**European Patent Office**

**Office européen des brevets**

(11) **EP 0 780 206 B1**

(12) **EUROPÄISCHE PATENTSCHRIFT**

(45) Veröffentlichungstag und Bekanntmachung des Hinweises auf die Patenterteilung:
**14.04.2004 Patentblatt 2004/16**

(51) Int Cl.⁷: **B29B 9/10**, B29C 44/02, C08J 9/16, C08L 23/16

(21) Anmeldenummer: **96117040.4**

(22) Anmeldetag: **24.10.1996**

(54) **Verfahren zur Herstellung von Partikelschaum**

Process for making foamed particles

Procédé de fabrication de particules de mousse

(84) Benannte Vertragsstaaten:
**DE**

(30) Priorität: **19.12.1995 DE 19547398**

(43) Veröffentlichungstag der Anmeldung:
**25.06.1997 Patentblatt 1997/26**

(73) Patentinhaber: **Fagerdala Deutschland GmbH**
**99885 Ohrdruf (DE)**

(72) Erfinder:
• **Träger, Michael, Dr.**
**45721 Haltern (DE)**

• **Wirobski, Reinhard**
**45768 Marl (DE)**

(74) Vertreter: **Kaewert, Klaus**
**Rechtsanwalt,**
**Gänsestrasse 4**
**40593 Düsseldorf (DE)**

(56) Entgegenhaltungen:

| | |
|---|---|
| EP-A- 0 305 862 | EP-A- 0 564 781 |
| EP-A- 0 668 139 | EP-A- 0 673 963 |
| EP-A- 0 805 009 | DE-A- 1 915 950 |
| JP-A- 52 053 965 | US-A- 4 385 016 |
| US-A- 4 606 873 | US-A- 5 234 963 |

**Beschreibung**

Gegenstand der Erfindung ist ein Verfahren zur Herstellung kugelförmiger Kunststoffgranulate zum Zwecke der Verschäumung zu Schaumstoffpartikeln.

Bei der Herstellung von Formteilen aus Partikelschaum ist es generell erwünscht, daß die Schaumpartikel eine kugelförmige Gestalt besitzen. Ein derartiger Partikelschaum zeigt ein besseres Verhalten bei Formenfüllung und Verschweißung der Schaumpartikel untereinander; die erhaltenen Formteile weisen glattere, geschlossenere Oberflächen auf. Damit wird die Wasseraufnahme des Formteils verringert und die mechanische Stabilität erhöht.

Der hier betrachtete Partikelschaum wird nach dem Dispersionsverfahren aus Granulat hergestellt. Das Dispersionsverfahren ist Stand der Technik (EP-A-0 053 333; EP-A-0 095 109). Um kugelförmigen Partikelschaum herzustellen, kann man hierbei zylindrisches Stranggranulat einsetzen oder auch Granulat, das durch Unterwassergranulierung erhalten wurde.

In der EP-A-0 195 118 werden durch Stranggranulierung eines Propylen-Copolymers erhaltene Granulate beschrieben, die zur Herstellung von Partikelschäumen nach dem Dispersionsverfahren gut geeignet sein sollen. Derartige Stranggranulate haben eine zylindrische Form mit einem Verhältnis von Länge zu Durchmesser (l/d-Verhältnis) von größer als 1. Es ist bekannt, daß bei der Wärmebehandlung während der Verschäumung die zylindrische Form in eine kugelförmige Gestalt übergeht, was durch die viskoelastischen Eigenschaften der Polymerschmelze bedingt ist. Bei der Extrusion wird die Polymerschmelze nämlich überdehnt und abgeschreckt; die nachfolgende Wärmebehandlung bei der Verschäumung führt zu einer Rückerholung der Überdehnung und im wesentlichen zu einer Verkürzung der Längedimension des zylindrischen Granulats. Darauf aufbauend beschreibt die EP-A-0 359 032 ein Verfahren zur Stranggranulierung, bei dem die Dehnung der Polymerschmelze in Abhängigkeit vom nachfolgend gewünschten Expansionsgrad (E) des Partikelschaumes eingestellt wird. Bei gleichbleibendem Granulatdurchmesser sollen sich dort bei der Herstellung von stark expandiertem (z. B. E = 50) und von geringer expandiertem (z. B. E = 15) Partikelschaum die Längen der eingesetzten Granulate bis um den Faktor 2 unterscheiden.

Verfahren, die bezüglich der technischen Durchführbarkeit ähnlich aufwendig sind, werden in der DE-A-26 26 968 und der JP-A-6 0115 413 beschrieben. In der DE-A-26 26 968 werden Stranggranulate mit einem Verstreckungsfaktor der Polymerschmelze zwischen 2 und 40 beschrieben. Das l/d-Verhältnis kann auch hier nicht frei gewählt werden, sondern muß in Abhängigkeit vom Verstreckungsfaktor eingestellt werden. Die JP-A-6 0115 413 lehrt, daß das l/d-Verhältnis der Stranggranulate eine Funktion unterschiedlicher Orientierung der Molekülketten in zentrums- bzw. randnahen Granulatbereichen sein soll.

Ein zusätzliches Coating der Granulate wird durchgeführt, wenn ihre Transformationsfähigkeit von der Zylinder- zur Kugelform verstärkt (JP-B-79 037 191) oder wenn ein Verkleben bei der Wärmebehandlung verhindert werden soll (DE-A-26 26 970).

Dieser Stand der Technik beschreibt also aufwendige Extrusionsverfahren zur Herstellung schäumbarer Granulate. Den herstellbedingten Nachteilen der Zylinderform des daraus hergestellten Partikelschaumes wird dadurch entgegengewirkt, daß den Granulaten eine Transformationsfähigkeit zur Kugelform vermittelt wird. Diese Transformationsfähigkeit kann allerdings erst beurteilt werden, wenn in einem folgenden Prozeßschritt das Granulat einer Wärmebehandlung unterzogen wird.

Die Herstellung verschäumbarer, kugelförmiger Granulate durch Unterwassergranulierung wird in der JP-A-52 053 965 beschrieben. Hierbei wird die bei 180 bis 250 °C erschmolzene Polymermasse durch eine Lochplatte direkt in ein 50 bis 100 °C warmes Kühlbad gedrückt und mittels an der Lochplatte rotierender Messer geschnitten.

Auch die EP-A-0195118 offenbart auf Seite 9, Zeilen 13 und 14, Partikel mit einer Kugelform. Obwohl eine Granulierung unter Wasser bei einer Temperatur von 20 bis 48 Grad Celsius an sich aus dem Stand der Technik bekannt ist - vgl. US-A4606873, Spalte 6, Zeile 2 - handelt es sich entweder um bereits mit Treibmittel beaufschlagte Polymere oder um Unterwassergranulierung ohne weitere Treibmittelbeladung der Partikel.

Der Erfindung liegt daher die Aufgabe zugrunde, zu einer Verbesserung der Granulierung zu kommen.

Diese Aufgabe wird gelöst durch ein Verfahren gemäß dem Anspruch 1.

Darüber hinaus sollte in einer zusätzlichen Aufgabenstellung die Oberfläche des Granulates frei von Kratern und Schnittfäden sein, um einer Verklebungsneigung beim Verschäumprozeß entgegenzuwirken.

Überraschenderweise wurde gefunden, daß diese Aufgabe dann gelöst wird, wenn die Temperatur des Granulierwassers bis kurz vor den Temperaturbereich abgesenkt wird, bei dem ein Verstopfen der Extruder-Lochplatte durch erstarrende Schmelze eintritt. Dieser Temperaturbereich wird gewöhnlich durch den Fachmann wegen des dann häufig resultierenden instabilen Extruderbetriebes gemieden.

Das erfindungsgemäße Verfahren zur Herstellung eines weitgehend kugelförmigen, verschäumbaren Kunststoffgranulats durch Unterwassergranulierung ist dadurch gekennzeichnet, daß die Temperatur des Granulierwassers 36 bis 42°C beträgt

Das Verfahren der Unterwassergranulierung ist Stand der Technik, so daß sich eine genauere Beschreibung an dieser Stelle erübrigt.

In einer bevorzugten Ausführungsform ist bei der Extrusion der Kunststoffschmelze durch die Lochplatte der Durchsatz je Loch kleiner als 4 kg/h, besonders bevorzugt kleiner als 3 kg/h und insbesondere 1,8 bis 2,5 kg/h.

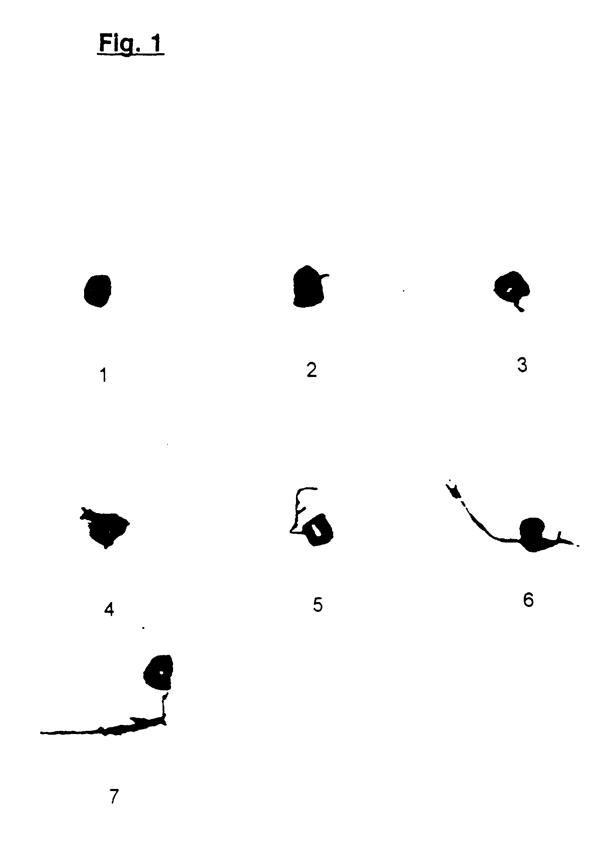

Zur quantitativen Beurteilung der aufgabengemäßen Kriterien "weitgehend kugelige Form" und "Schnittgüte" wurden umfangreiche Untersuchungen mit Hilfe interaktiver Bildanalysesysteme (IBAS) durchgeführt. Fig. 1 zeigt beispielhaft eine Auswahl von Granulaten nach Erfassung durch das IBAS-Gerät der Firma Kontron Bildanalyse GmbH, Vertrieb Carl Zeiss, Köln.

Obwohl alle dargestellten Granulatkörner eine kugelige Grundform aufweisen, wird die erfindungsgemäße Aufgabenstellung alleine durch das Granulatkorn Nr. 1 wiedergegeben. Quantitativ kann diese Eigenschaft durch den Formfaktor "Form PE" beschrieben werden, der mit Hilfe des Bildanalysegerätes gemäß der Formel

$$\text{Form PE} = (4\,\pi \cdot \text{Projektionsfläche})/\text{Umfang}^2$$

leicht ermittelt werden kann.

Das Projektionsbild einer idealen Kugel ergibt den Formfaktor Form PE-Kugel = 1.

Die Tabelle 1 zeigt eine Aufstellung der gemessenen Granulatkörner in Fig. 1.

Tabelle 1

| Granulat-Nr. | min. Durchmesser [mm] | max. Durchmesser [mm] | Form PE [-] |
|---|---|---|---|
| 1 | 1,19 | 1,45 | 0,82 |
| 2 | 1,59 | 2,08 | 0,59 |
| 3 | 1,34 | 1,85 | 0,50 |
| 4 | 1,62 | 2,39 | 0,37 |
| 5 | 1,99 | 2,73 | 0,12 |
| 6 | 1,65 | 7,29 | 0,06 |
| 7 | 3,44 | 7,06 | 0,05 |

In einer bevorzugten Ausführungsform der vorliegenden Erfindung liegt der Formfaktor (Form PE) im Bereich von 0,75 bis 1 und ganz besonders bevorzugt im Bereich von 0,80 bis 1.

In einer weiteren bevorzugten Ausführungsform besteht das Kunststoffgranulat im wesentlichen aus einem Polyolefin. Als Polyolefine können gemäß dem Stand der Technik Homo- und Copolymere verwendet werden wie beispielsweise Propen-Ethen- oder Propen-Buten-1-Randomcopolymere, Random-Terpolymere von Ethen, Propen und Buten-1, Ethen-Propen-Blockcopolymere sowie Homopolymere von Ethen, Propen oder Buten-1, Ethen-Vinylacetat-Copolymere oder Ethen-Methylmethacrylat-Copolymere. Bevorzugt wird ein Ethen-Propen-Randomcopolymerisat mit 1 bis 15 Gew.-% Ethen und besonders bevorzugt mit 2 bis 5 Gew.-% Ethen eingesetzt. Die Schmelzflußrate gemäß DIN ISO 1133 bei 230 °C liegt üblicherweise im Bereich von 1 bis 30 g/10 min. und bevorzugt im Bereich von 5 bis 25 g/10 min..

Das Polymere kann Zusätze enthalten wie beispielsweise eine feste Schäumhilfe (EP-A-0 095 109); beispielhaft seien Ruß, Talkum, Magnesiumhydroxid oder Dibenzylidensorbitol genannt. Weitere mögliche Zusätze sind Verarbeitungshilfsmittel, Farbstoffe, Antistatika, flammhemmende Zusätze, Stabilisatoren oder andere Polymere.

Der erfindungsgemäß erhaltene Partikelschaum kann nach allen Dispersionsschäumungs-Verfahren des Standes der Technik hergestellt werden. Im allgemeinen geht man hierbei so vor, daß

a) in einem druckfesten Reaktor eine Dispersion, die im wesentlichen aus dem Kunststoffgranulat sowie einem flüssigen Dispersionsmittel besteht, sowie ein Treibmittel vorgelegt wird,

b) eine Wärmebehandlung durchgeführt wird, und anschließend

c) die Dispersion durch eine Öffnung in einen Niederdruckraum entlassen wird, wobei die Polymerpartikel verschäumt werden.

Als Treibmittel kann gemäß dem Stand der Technik entweder ein flüchtiges organisches Treibmittel oder ein anorganisches Gas wie Stickstoff, Luft oder $CO_2$ verwendet werden.

Weiterhin kann die Dispersion, gemäß dem Stand der Technik, ein Dispergierhilfsmittel enthalten.

Bezüglich weiterer Einzelheiten sei auf die Europäischen Patentanmeldungen EP-A-0 053 333, 0 095 109, 0 113 903, 0 168 954, 0 630 935 und 0 646 619 verwiesen.

Der erfindungsgemäß erhaltene Partikelschaum wird in kontinuierlichen Verfahren hergestellt, insbesondere dort, wo eine heiße Dispersion, die im wesentlichen aus dem Kunststoffgranulat, einem flüssigen Dispersionsmittel und ggf. einem Treibmittel besteht, durch eine Stoffaustauschsäule oder ein Rohr gefördert wird, wonach die Dispersion durch eine Öffnung in einen Niederdruckraum entlassen wird, wobei die Polymerpartikel verschäumt werden. Bezüglich weiterer Einzelheiten sei auf die EP-A-0 564 781 und die EP-A-0 673 963 verwiesen.

Der nach allen diesen Verfahren erhaltene Partikelschaum ist nahezu ideal kugelförmig und praktisch frei von Schnittfäden oder Verklebungen.

Der erhaltene Partikelschaum kann nach allen Methoden des Standes der Technik zu Formteilen hervorragender Qualität verarbeitet werden, beispielsweise nach dem Druckfüllverfahren bzw. Kompressionsverfahren DE-A 25 42 452), dem Tauchkantenverfahren bzw. Crack-Spalt-Verfahren oder nach vorheriger Druckbeladung (EP-A-0 072 499). Im übrigen sei auf das Buch "Thermoplastische Partikelkunststoffe", VDI-Verlag 1993 verwiesen.

Der erfindungsgemäß erhaltene Partikelschaumstoff zeichnet sich durch ein gutes Fließverhalten beim Füllvorgang aus. Dadurch lassen sich dünnwandige Formteile mit Stegen, Zapfen, spitz zulaufenden Bereichen, Durchbrüchen usw. hervorragend darstellen, beispielsweise Transportboxen, Gerätechassis zur Aufnahme von Elektronikbauteilen, Side-Impact-Polster, Fahrradhelme, Sonnenblenden, Stoßfängerkerne, Verpackungsformteile, Werkzeugboxen oder Füllteile.

Die Erfindung soll im folgenden beispielhaft erläutert werden.

Beispiel 1:

In einem Doppelschneckenextruder mit gegenläufigen Schneckenwellen und Unterwassergranuliervorrichtung wird ein Propylen-Copolymerisat mit 3,5 Gew.-% Ethen, einem Schmelzpunkt $T_m$ = 145 °C und einer Schmelzflußrate MFI = 15 g/10 min. granuliert. Die Massetemperatur beträgt 180 °C, der Durchsatz pro Loch 1,8 kg/h. Die Temperatur des Granulierwassers wird nach Granulatstart von 42 °C auf 36 °C abgesenkt. Die Ergebnisse sind in der Tabelle 2 zusammengestellt.

Beispiel 2:

Es wird wie in Beispiel 1 gearbeitet mit dem Unterschied, daß die Temperatur des Granulierwassers bei 42 °C belassen wird (siehe Tabelle 2).

Vergleichsbeispiel 1 (Stranggranulierung):

In einem Doppelschneckenextruder mit gegenläufigen Schneckenwellen und Stranggranuliervorrichtung wird das gleiche Propylencopolymerisat wie im Beispiel 1 granuliert, wobei die Temperatur des Granulierbades 50 °C beträgt (siehe Tabelle 2).

Vergleichsbeispiel 2 (Stranggranulierung):

Es wird wie in Vergleichsbeispiel 1 vorgegangen mit dem Unterschied, daß eine kleinere Extrusionsöffnung verwendet wird (siehe Tabelle 2).

Vergleichsbeispiel 3 (Unterwassergranulierung):

Es wird wie in Beispiel 1 gearbeitet mit dem Unterschied, daß die Temperatur des Granulierwassers von Anfang bis Ende 48 °C beträgt.

Herstellung von Partikelschaum aus den gemäß Beispiel 1 bis Vergleichsbeispiel 2 erhaltenen Granulaten:

In einem 60 l-Reaktor wird eine Suspension, bestehend aus

100,0 Gew.-Tln. Wasser
15,0 Gew.-Tln. Granulat,
6,3 Gew.-Tln. n-Butan,
0,1 Gew.-Tln. feinpulverigem Tricalciumphosphat und

0,05 Gew.-Tln. Marlon® A 360 (Tensid)

auf 133 °C aufgeheizt und bei dieser Temperatur 30 Minuten gerührt. Nach Ablauf dieser Haltezeit wird der Reaktordruck durch Aufdrücken von Stickstoff auf 22 bar erhöht. Anschließend wird der Reaktorinhalt innerhalb von 20 Sekunden in einen unter Atmosphärendruck stehenden Behälter ausgetragen. Es werden Schaumpartikel mit einem Schüttgewicht von 27 g/l erhalten; bei Verwendung von Granulat aus den Beispielen 1 und 2 sind diese nahezu rund und haben eine glatte Oberfläche.

Herstellung von Formteilen

Die oben erhaltenen Schaumpartikel werden nach der Gegendruckmethode zu Formteilen verarbeitet. Beim verwendeten Formteil handelt es sich um einen Baustein der Maße 360 x 120 x 150 mm mit 7 bis 20 mm starken Stegen und maximalen Materialdicken von 80 mm.

Durch die mit Düsen bestückten Werkzeugwände wird ein Dampfdruck von 2,8 bis 3,5 bar für 6 bis 8 Sekunden zur innigen Verschweißung der Schaumperlen geleitet. Anschließend wird das Werkzeug und damit das Formteil mit Wasser auf eine Temperatur von 60 bis 80 °C abgekühlt.

Erhalten werden Formteile mit einem Raumgewicht von 50 bis 60 g/l. Bei Verwendung von erfindungsgemäß hergestelltem Partikelschaum (aus Granulat gemäß den Beispielen 1 und 2) zeichnen sich die Formteile durch eine hohe Konturengenauigkeit aus; zudem ist die Oberfläche dieser Formteile bei visueller Beurteilung glänzend, glatt und weist nahezu keine durch Zwickel bedingten Fehlstellen auf.

Bestimmung der Wasseraufnahme

Die Masse des aufgenommenen Wassers wird gemäß DIN 53 434 im Untertauchversuch festgestellt und auf die Masse des Prüfkörpers bezogen.

Tabelle 2

| Beispiel | Minimaler Durchmesser [mm] | Maximaler Durchmesser [mm] | Form PE | Formteiloberfläche | Wasseraufnahme des Formteils [Gew.-%] |
|---|---|---|---|---|---|
| 1 | 1,20 | 1,75 | 0,84 [a] | ++ | 8,8 |
| 2 | 1,82 | 2,77 | 0,79 [b] | + | 10,5 |
| Vgl. 1 | 3,5 | 4,5 | 0,75 | 0 | 27,5 |
| Vgl. 2 | 0,5 | 5,0 | 0,24 | - | 30,2 |
| Vgl. 3 | nicht ermittelbar, da die Granulate zu "Ketten" verklebt sind | | nicht ermittelt | | |

a) Mittelwert von 3468 Messungen

b) Mittelwert von 888 Messungen

**Patentansprüche**

1. Verfahren zur zweisstufigen Herstellung von Partikelschaum aus einem Polyolefin, wobei in er ersten Stufe das Polyolefin extrudiert und zu Partikeln granuliert wird, und die Partikel in einer zweiten Stufe in einem Reaktor in einem flüssigen Dispersionsmittel unter Druck erwärmt und mit Treibmittel beaufschlagt werden, so daß eine Treibmittelbeladung der Partikel entsteht und wobei die Partikel aus dem Reaktor in eine Umgebung niedrigeren Drukkes entlassen werden und aufschäumen,
**dadurch gekennzeichnet,**
**daß** die Granulierung unter Wasser bei einer Temperatur von 36 bis 42 Grad Celsius,
erfolgt, wobei eine Partikelform mit einem Formfaktor von 0,75 bis 1 erzeugt wird, der sich nach der Formel berechnet:

$$\text{Form faktor} = \text{Form PE} = (4\pi \cdot \text{Projektionsfläche})/\text{Umfang}^2$$

2. Verfahren nach Anspruch 1, **dadurch gekennzeichnet, daß** das Polyolefin ein Ethen-Propen-Randomcopolymerisat mit 1 bis 15 Gew% Ethen ist.

3. Verfahren nach Anspruch 1 oder 2, wobei das entstandene Kunststoffgranulat dadurch aufgeschäumt wird, daß

   a) das entstandende Granulat in einem druckfesten Reaktor in eine Dispersion gebracht wird, d ie im wesentlichen aus dem Kunststoffgranulat sowie einem flüssigen Dispersionsmittel und einem Treibmittel besteht
   b) eine Wärmebehandlung durchgeführt wird und anschließend
   c) die Dispersion durch eine Öffnung in einen Niederdruckraum entlassen wird, wobei das Kunststoffgranulat aufgeschäumt wird.

4. Verfahren 3, **dadurch gekennzeichnet, daß** die Dispersion durch eine Stoffaustauschsäule oder eine Rohr gefordert und anschließend durch eine Öffnung in den Niederdruckraum entlassen wird.

**Claims**

1. Process for the two-step production of particle foam from a polyolefin, in which, in the first step, the polyolefin is extruded and granulated to give particles, and, in a second step, the particles are heated under pressure and treated with blowing agent in a reactor in a liquid dispersion medium, causing the particles to be charged with blowing agent, and in which the particles are discharged from the reactor into an environment of lower pressure and expand, **characterized in that** the granulation is carried out under water at a temperature of from 36 to 42 degrees Celsius, producing a particle shape having a form factor of from 0.75 to 1, which is calculated in accordance with the formula:

$$\text{form factor} = \text{form PE} = (4\pi \cdot \text{projection area})/\text{circumference}^2$$

2. Process according to Claim 1, **characterized in that** the polyolefin is a random ethene-propene copolymer comprising from 1 to 15% by weight of ethene.

3. Process according to Claim 1 or 2, where the resultant plastic granules are expanded by

   a) introducing the resultant granules into a dispersion which essentially consists of the plastic granules and a liquid dispersion medium and a blowing agent in a pressure-tight reactor,

   b) carrying out a heat treatment, and subsequently

   c) discharging the dispersion through an aperture into a low-pressure space, during which the plastic granules are expanded.

4. Process according to Claim 3, **characterized in that** the dispersion is transported through a mass transfer column or a tube and is subsequently discharged through an aperture into the low-pressure space.

**EP 0 780 206 B1**

**Revendications**

1.  Procédé de fabrication en deux étapes de mousse particulaire, à partir d'une polyoléfine, où lors d'une première étape, la polyoléfine est extrudée et granulée en particules et, en une deuxième étape, les particules étant chauffées sous pression dans un réacteur, dans un agent dispersant liquide, et exposées à un agent porogène, de manière à produire une charge des particules en agent porogène, et les particules étant laissées échapper du réacteur, pour être amenées à une ambiance à pression plus faible, et étant laissées mousser, **caractérisé en ce que** la granulation s'effectue sous l'eau à une température de 36 à 42 degrés Celsius, une forme particulaire étant produite avec un facteur de forme de 0,75 à 1, qui se calcule suivant la formule :

$$\text{Facteur de forme} = \text{Forme PE} = (4\pi.\text{surface de projection})/\text{périmètre}^2$$

2.  Procédé selon la revendication 1, **caractérisé en ce que** la polyoléfine est un copolymérisat aléatoire éthylène-propylène avec de 1 à 15 % en poids d'éthylène.

3.  Procédé selon la revendications 1 ou 2, le granulat de matière synthétique produit étant moussé par le fait que :

    a) le granulat produit est placé en dispersion dans un réacteur résistant à la pression, la dispersion étant formée essentiellement du granulat de matière synthétique, ainsi que d'un agent dispersant liquide et d'un agent porogène
    b) on effectue un traitement thermique et, ensuite,
    c) la dispersion est laissée échappée par une ouverture, pour passer dans une enceinte à basse pression, le granulat de matière synthétique étant alors moussé.

4.  Procédé selon la revendication 3, **caractérisé en ce que** la dispersion est transportée dans une colonne d'échange de masse ou dans un tube, et est ensuite laissée échapper par une ouverture, pour passer dans une enceinte basse pression.

## Fig. 1